# EUROPEAN PATENT APPLICATION

(11) **EP 3 944 650 A1**
(43) Date of publication of application: **26.01.2022**
(21) Application number: 21185942.6
(22) Date of filing: 15.07.2021
(51) Int. Cl.: H04W 12/06, H04W 12/37, H04W 12/08, H04L 29/06

(54) **DEVICE MANAGEMENT ENFORCEMENT IN SECURE INSTALLATIONS**

(30) Priority: 20.07.2020 US 202016933501
(71) Applicant: Citrix Systems Inc., Fort Lauderdale, FL 33309 (US)
(72) Inventor: SAMPSON, Raymond Matthew, Fort Lauderdale, 33309 (US); KEJARIWAL, Shikha Kumari, Fort Lauderdale, 33309 (US); RIOS CARO, Adrian, Fort Lauderdale, 33309 (US); LOPEZ GARCIA, Eddiel, Fort Lauderdale, 33309 (US)
(74) Representative: Mewburn Ellis LLP

(57) **Abstract**

A system and method of providing device management in a secure installation including allowing or denying access to a network in which to exchange communications. The method includes detecting presence of a device based on receipt of communications from the device, and determining whether the device is unmanaged by the system based on data included with the communications received from the device. The device is indicated as unmanaged if the data does not include a signature indicative of enrollment of the device with the system. In response to determining that the device is unmanaged by the system, denying access to the network.

## Description

### BACKGROUND OF THE DISCLOSURE

Device management, and more particularly mobile device management, involves the administration and oversight of smartphones, tablet computers, laptops, etc., within an organization. Device management ensures that devices adhere to the policies of the organization to provide supportability, security and functionality. In highly secure installations, device management may involve extra precautions to ensure unmanaged devices are not allowed to access resources of the organization.

### BRIEF DESCRIPTION OF THE DISCLOSURE

Aspects of this disclosure provide a system and method of device management to control network access of unmanaged devices entering or discovered in a secure installation.

A first aspect of the disclosure provides a system having a memory and a processor coupled to the memory and configured to allow or deny access to a network in which to exchange communications. An implemented process includes detecting the presence of a device based on receipt of communications from the device, and determining whether the device is unmanaged by based on data included with the communications received from the device. The device is indicated as unmanaged if the data does not include a signature indicative of enrollment of the device with the system. In response to determining that the device is unmanaged by the system, denying access to the network.

A second aspect of the disclosure provides a computerized method to allow or deny access to a network in which to exchange communications. The method includes detecting the presence of a device based on receipt of communications from the device, and determining whether the device is unmanaged based on data included with the communications received from the device. The device is indicated as unmanaged if the data does not include a signature indicative of enrollment of the device with the system. In response to determining that the device is unmanaged by the system, denying access to the network.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
Figure 1 depicts an illustrative device management system, in accordance with an illustrative embodiment.
Figure 2 depicts a further illustrative device management system, in accordance with an illustrative embodiment.
Figure 3 depicts a flow diagram for implementing the device management systems of Figures 1 and/or 2, in accordance with an illustrative embodiment.
Figure 4 depicts a network infrastructure, in accordance with an illustrative embodiment.
Figure 5 depicts a computing system, in accordance with an illustrative embodiment.
Figure 6 depicts an illustrative enterprise mobility management system that may be used in accordance with one or more illustrative aspects described herein.
Figure 7 depicts another illustrative enterprise mobility management system that may be used in accordance with one or more illustrative aspects described herein.

The drawings are intended to depict only typical aspects of the disclosure, and therefore should not be considered as limiting the scope of the disclosure.

### DETAILED DESCRIPTION OF THE DISCLOSURE

Embodiments of the disclosure include technical solutions for providing device management when dealing with unmanaged devices entering or discovered within a secure installation, such as a building, campus, or other sensitive area. Device management is typically provided via various administrative processes within an organization, including processes in which devices are manually checked when a user enters the installation. Relying on manually checking each device including, e.g., devices possessed by short term workers, contractors, visitors, or even intruders, as it enters an installation is not an easy task, and will not prevent or manage their use once they have been allowed in. Current device management processes associated with a secure network are generally not equipped to automatically identify and deal with unmanaged devices entering or discovered within an installation. Allowing unmanaged devices into a secure installation creates security risks to the information technology (IT) infrastructure, including potentially providing unwanted access to digital information or an attack on the system. The present solutions provide an automated system for detecting and dealing with unmanaged devices while on the premises of a secure installation. In illustrative embodiments, once an unmanaged device is detected, the device user is offered to enroll the device or have the device capabilities limited.

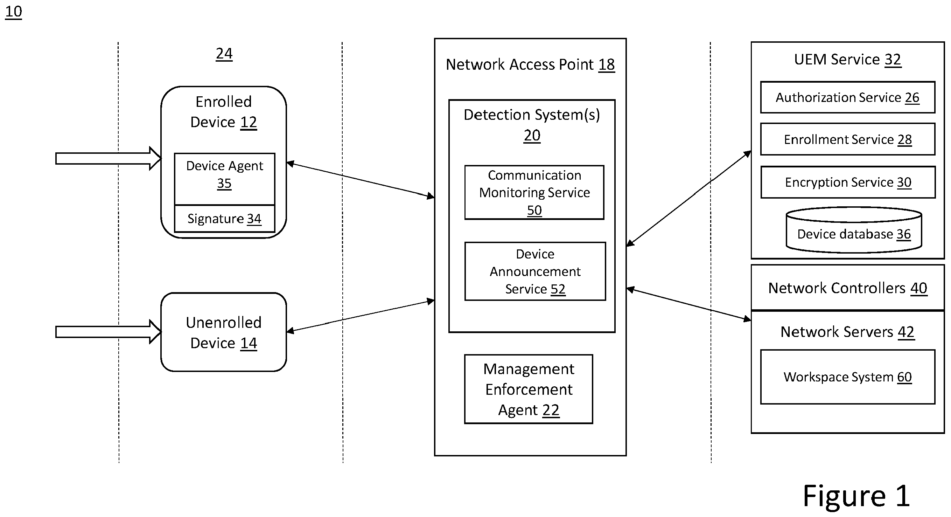

Figure 1 depicts an illustrative device management system 10, in which an enrolled device 12 and an unenrolled device 14 enter a secure installation 24. In one illustrative embodiment, devices 12, 14 can be detected anywhere within the secure installation 24. In other embodiments, detection zones may for example be implemented throughout the installation 24, e.g., at doorways and other entry points. Detection may achieved using one or more detection systems 20 that integrate with a network access point 18, such as a router. Once detected, a management enforcement agent 22, which also integrates with the access point 18, determines whether the device is managed (i.e., an enrolled device 12) or unmanaged (i.e., an unenrolled device 14) based on the existence or non-existence of a signature 34 emitted from and indicative of the device. A unified endpoint management (UEM) service 32 controls the overall process, including, e.g., coordinating access points 18 and tracking enrolled and unenrolled devices in a device database 36. If a device is identified as an unenrolled device 14, UEM service 32 can offer an enrollment option to the user of the unenrolled device 14. Any type or number of enrollment options may be offered. Different types of enrollment may for example allow for access to some or all network servers 42, be temporal in nature (e.g., allow access for 24 hours), allow network access while remaining on the premises, allow access to certain resources, etc.

One type of illustrative detection system 20 that can be deployed involves a communication monitoring service 50, which can monitor for communications and identify an unenrolled device 14 anywhere within the secure installation 24 or, e.g., in specific areas where wired or wireless communications channels are active and commonly used, e.g., a conference room, an auditorium, etc. In one embodiment, beacons or the like located throughout the installation 24 can be utilized to scan for communications. Mobile devices are typically equipped to regularly output communications, e.g., to search and connect to a wireless router, a cellular service, etc. The communication monitoring service 50 will monitor for such communications, e.g., using internet or cellular protocols, to detect the unenrolled device 14. Once a device is detected and a communication is obtained, management enforcement agent 22 evaluates the communication to determine if a valid signature 34 is present. For example, in order to establish a network connection, a device may attempt to engage in a handshake protocol with a network access point 18 in which the device sends an initial communication, the access point responds, the device further responds, and so on, e.g., to negotiate authentication, encryption, etc. During the handshake process, the access point may request a request a signature 34, which can be provided by the device agent 35. Alternatively, the device agent 35 can be configured to simply supply the signature 34 as part of an established handshake protocol. When such a signature 34 is not present, the device can be flagged as an unenrolled device 14 in the device database 36.

Management enforcement agent 22 is accordingly utilized to identify and facilitate authorization of a signature 34. As noted, management enforcement agent 22 is configured to evaluate data from a received communication, and determine if a signature 34 is emitted from an enrolled device 12, e.g., during a handshake protocol when a device attempts to connect to an access point 18. In some embodiments, the signature 34 may be emitted in distinctive patterns in accordance with agreements (e.g., predefined agreements) established by the UEM service 32 and device agent 35. For example, the signature 34 may be emitted using pre-defined, always changing patterns in communication frames at different levels, which the management enforcement agent 22 will be configured to search for. Once a signature 34 is detected, management enforcement agent 22 can interface with an authorization service 26 on the UEM service 32 to authenticate the signature and recognize the device as an enrolled device 12.

Device agent 35, along with the signature 34, is provided by the UEM service 32 to the enrolled device 12 when the device is enrolled by an enrollment service 28. As noted, the signature 34 can be emitted in any manner, e.g., in the device's communication frame at a pre-defined level, e.g., according to the capabilities of network switches (e.g., L2 or above). Signature 34 may be regularly altered on a rolling basis (i.e., time dependent) by the UEM service 32 using a secure connection. Regularly changing the signature 34 avoids potential spoofing or incorrect identification. The device agent 35 running on an enrolled device 12 will guarantee the signature 34 is properly sent at the corresponding rates for all communications and will ensure the signature 34 is up to date by observing the expiration policies established beforehand.

Unenrolled devices 14, which do not present the signature 34, will be denied access (or given only limited access) to the network servers 42 by network controllers 40. As noted, UEM service 32 may include an enrollment service 28 to offer enrollment options to unenrolled devices 14, e.g., through a connection web portal. In some cases, to enroll and obtain a device agent 35 and signature 34, a device must be managed by a workspace system 60 (e.g., such as that provided by Citrix^{®} Workspace commercially available from Citrix Systems of Fort Lauderdale, Florida in the United States), using device management, profile management, and/or application management. The workspace system 60 can be utilized to ensure secure channels are used to retrieve the signature 34.

To further improve security, an encryption service 30 may be utilized to store the signature 34 in a secure token and e.g., utilize asymmetric cryptography for validation. For example, the enrolled device 12 and the UEM service 32 can exchange public keys to verify the token exchange is signed by a trusted peer's private key. Tokens whose signature can be verified will always be trustworthy since an attacker not only has to obtain (or forge) a token, but also has to obtain a valid private key to sign the token.

A further type of detection system 20 that may be utilized to detect a device entering the secure installation 24 is a device announcement service 52. Device announcement service 52 may utilize a technology such as Bluetooth, Low Energy Bluetooth (BLE), near field communications (NFC), etc., which offer announcing features to allow for the discovery of devices.

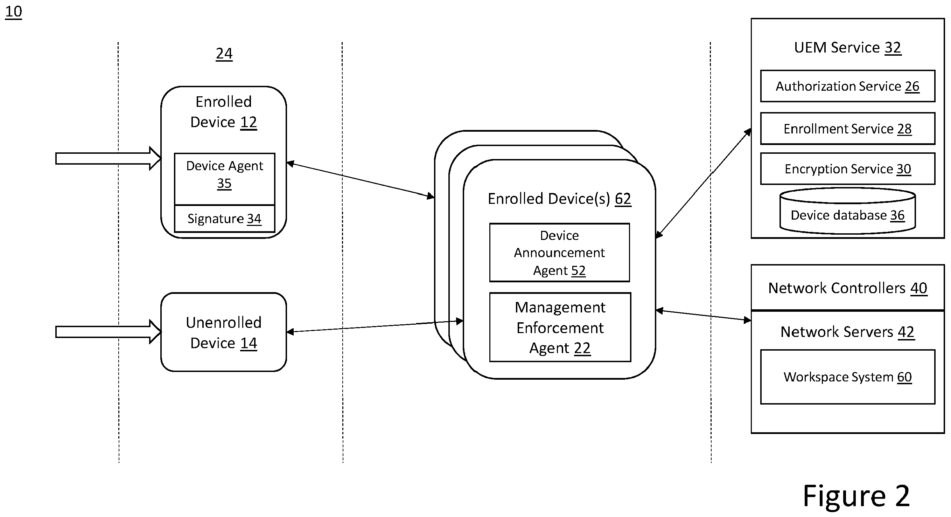

Figure 2 depicts a further embodiment of device management system 10 in which enrolled devices 62 are configured to detect and authorize other devices in the same vicinity. Detection may for example involve receiving a BLE announcement via a device announcement agent 52 installed on the enrolled devices 62. When a BLE announcement is found that does not contain the signature 34, the detected device will be reported as unenrolled. After a device is identified as unenrolled, the enrollment options can be made available to the unenrolled device 14 by using Bluetooth capabilities, like offering a connection point.

Enrolled devices 62 can request from devices in their vicinity, which have been discovered by connections attempts (e.g., via Wi-Fi, Bluetooth or NFC) and who do not expose a known signature 34, the verification of its management status. When the device fails to respond with a signature 34, its unenrolled status will be confirmed and reported to UEM service 32. As in the previous case, after a device is identified as unenrolled, enrollment options can be made available to the unenrolled device 14, e.g., using Bluetooth capabilities, such as offering a network access point.

To further ensure a secure system 10, access to tokens or signatures should only be granted once a device has proven to be enrolled, and such tokens or signatures should be kept secret at all times. Further, the generation of signatures or tokens by the encryption service 30 should be random, and their transmission and storage should be cryptographically protected.

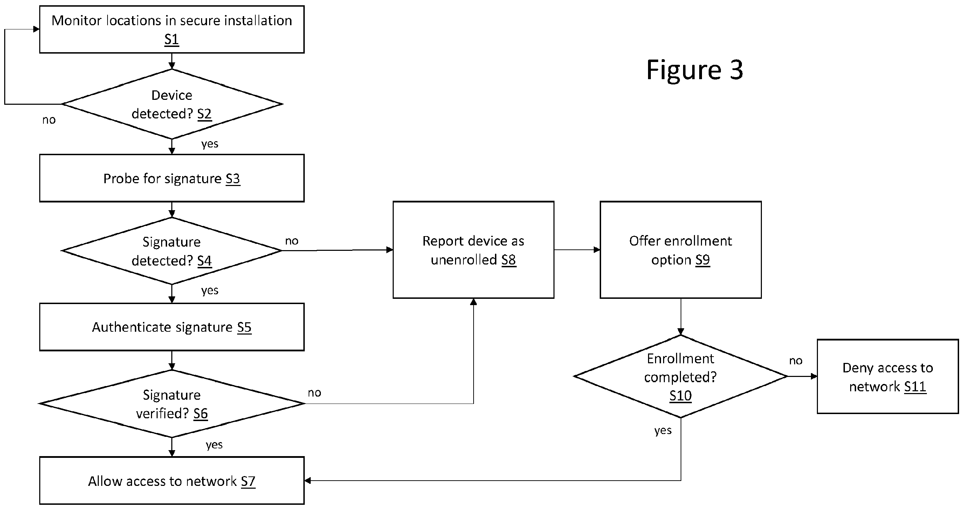

Figure 3 depicts flow diagram of a process for managing devices using the device management system 10 of Figures 1 and/or 2. At S1, one or more locations are monitored for new devices entering a secure installation 24 and at S2 a determination is made whether a device is detected. If a device is not detected, the monitoring continues at S1. As noted, monitoring can occur using beacons or the like in specific locations within the installation 24, e.g., at entrances, at locations where wireless or wired connections regularly occur such as a conference room, or scanning can occur throughout the installation 24. Detection of a new device may for example use a communication monitoring service 50 or a device announcement service 52. Further, scanning and detection may be implemented using a network access point 18 or an existing enrolled device 62.

If a device is detected at S2, the system probes (i.e., evaluates) a received communication for a signature 34, which may be packaged as a data packet outputted from the device. For example, as noted above, the signature may be requested or automatically supplied during a handshake process between the device and network access point 18. Other information, such as a device identifier, a timestamp, etc., may likewise be included and obtained from the communication. The communication may be broadcast from the device without prompting, or be outputted in response to a credential request, e.g., from the network access point 18 or an existing enrolled device 62. At S4, a determination is made whether a signature 34 is detected. For example, during a handshake process, the network access point 18 may request a signature. If no signature 34 is received, then the device is reported as unenrolled at S8. If a signature 34 is detected at S4, then the signature 34 is authenticated at S5, e.g., by comparing the signature 34 to a stored version of the signature at UEM service 32, which was previously associated with or assigned to the device. As noted, the signature 34 may be stored using an encrypted token, which is decrypted by an encryption service 30 at UEM service 32 and verified. For example, a tokenization scheme may be used in which the signature provided by the device is substituted with a token that is encrypted and maps to a secure storage at the UEM service, that holds the signature 34. If the signature 34 is successfully verified at S6, the device is recognized as enrolled and allowed to access the network at S7. If the signature 34 is not verified at S6, then the device is reported as unenrolled at S8.

In the event the device is reported as unenrolled at S8, either due to a lack of signature or an unverified signature, enrollment is offered to the device user at S9. If enrollment is successfully completed at S10, the device is allowed access to the network at S7. If enrollment is not successfully completed at S10, access to the network is denied at S11.

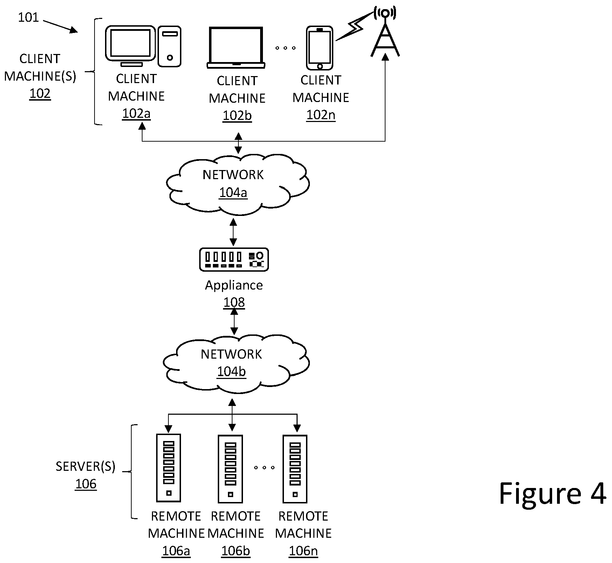

Referring to Figure 4, a non-limiting network environment 101 in which various aspects of the disclosure may be implemented includes one or more client machines 102A-102N, one or more remote machines 106A-106N, one or more networks 104, 104', and one or more appliances 108 installed within the computing environment 101. The client machines 102A-102N communicate with the remote machines 106A-106N via the networks 104, 104'.

In some embodiments, the client machines 102A-102N communicate with the remote machines 106A-106N via an intermediary appliance 108. The illustrated appliance 108 is positioned between the networks 104, 104' and may also be referred to as a network interface or gateway. In some embodiments, the appliance 108 may operate as an application delivery controller (ADC) to provide clients with access to business applications and other data deployed in a datacenter, the cloud, or delivered as Software as a Service (SaaS) across a range of client devices, and/or provide other functionality such as load balancing, etc. In some embodiments, multiple appliances 108 may be used, and the appliance(s) 108 may be deployed as part of the network 104 and/or 104'.

The client machines 102A-102N may be generally referred to as client machines 102, local machines 102, clients 102, client nodes 102, client computers 102, client devices 102, computing devices 102, endpoints 102, or endpoint nodes 102. The remote machines 106A-106N may be generally referred to as servers 106 or a server farm 106. In some embodiments, a client device 102 may have the capacity to function as both a client node seeking access to resources provided by a server 106 and as a server 106 providing access to hosted resources for other client devices 102A-102N. The networks 104, 104' may be generally referred to as a network 104. The networks 104 may be configured in any combination of wired and wireless networks.

A server 106 may be any server type such as, for example: a file server; an application server; a web server; a proxy server; an appliance; a network appliance; a gateway; an application gateway; a gateway server; a virtualization server; a deployment server; a Secure Sockets Layer Virtual Private Network (SSL VPN) server; a firewall; a web server; a server executing an active directory; a cloud server; or a server executing an application acceleration program that provides firewall functionality, application functionality, or load balancing functionality.

A server 106 may execute, operate or otherwise provide an application that may be any one of the following: software; a program; executable instructions; a virtual machine; a hypervisor; a web browser; a web-based client; a client-server application; a thin-client computing client; an ActiveX control; a Java applet; software related to voice over internet protocol (VoIP) communications like a soft IP telephone; an application for streaming video and/or audio; an application for facilitating real-time-data communications; a HTTP client; a FTP client; an Oscar client; a Telnet client; or any other set of executable instructions.

In some embodiments, a server 106 may execute a remote presentation services program or other program that uses a thin-client or a remote-display protocol to capture display output generated by an application executing on a server 106 and transmit the application display output to a client device 102.

In yet other embodiments, a server 106 may execute a virtual machine providing, to a user of a client device 102, access to a computing environment. The client device 102 may be a virtual machine. The virtual machine may be managed by, for example, a hypervisor, a virtual machine manager (VMM), or any other hardware virtualization technique within the server 106.

In some embodiments, the network 104 may be: a local-area network (LAN); a metropolitan area network (MAN); a wide area network (WAN); a primary public network 104; and a primary private network 104. Additional embodiments may include a network 104 of mobile telephone networks that use various protocols to communicate among mobile devices. For short range communications within a wireless local-area network (WLAN), the protocols may include 802.11, Bluetooth, and Near Field Communication (NFC).

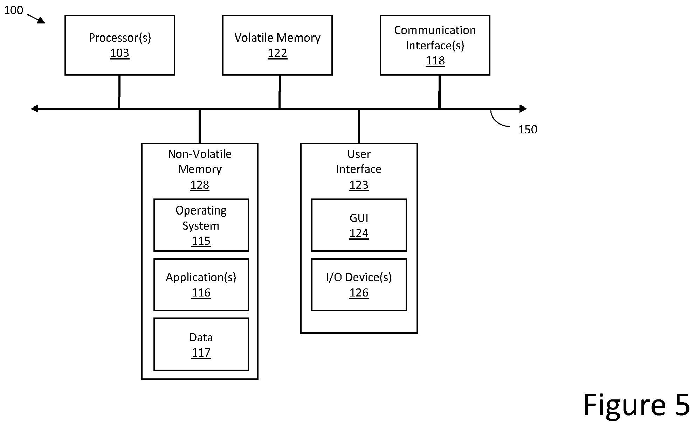

Figure 5 depicts a block diagram of a computing device 100 useful for practicing an embodiment of client devices 102, appliances 108 and/or servers 106. The computing device 100 includes one or more processors 103, volatile memory 122 (e.g., random access memory (RAM)), non-volatile memory 128, user interface (UI) 123, one or more communications interfaces 118, and a communications bus 150.

The non-volatile memory 128 may include: one or more hard disk drives (HDDs) or other magnetic or optical storage media; one or more solid state drives (SSDs), such as a flash drive or other solid-state storage media; one or more hybrid magnetic and solid-state drives; and/or one or more virtual storage volumes, such as a cloud storage, or a combination of such physical storage volumes and virtual storage volumes or arrays thereof.

The user interface 123 may include a graphical user interface (GUI) 124 (e.g., a touchscreen, a display, etc.) and one or more input/output (I/O) devices 126 (e.g., a mouse, a keyboard, a microphone, one or more speakers, one or more cameras, one or more biometric scanners, one or more environmental sensors, and one or more accelerometers, etc.).

The non-volatile memory 128 stores an operating system 115, one or more applications 116, and data 117 such that, for example, computer instructions of the operating system 115 and/or the applications 116 are executed by processor(s) 103 out of the volatile memory 122. In some embodiments, the volatile memory 122 may include one or more types of RAM and/or a cache memory that may offer a faster response time than a main memory. Data may be entered using an input device of the GUI 124 or received from the I/O device(s) 126. Various elements of the computer 100 may communicate via the communications bus 150.

The illustrated computing device 100 is shown merely as an example client device or server, and may be implemented by any computing or processing environment with any type of machine or set of machines that may have suitable hardware and/or software capable of operating as described herein.

The processor(s) 103 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A processor may perform the function, operation, or sequence of operations using digital values and/or using analog signals.

In some embodiments, the processor can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory.

The processor 103 may be analog, digital or mixed-signal. In some embodiments, the processor 103 may be one or more physical processors, or one or more virtual (e.g., remotely located or cloud) processors. A processor including multiple processor cores and/or multiple processors may provide functionality for parallel, simultaneous execution of instructions or for parallel, simultaneous execution of one instruction on more than one piece of data.

The communications interfaces 118 may include one or more interfaces to enable the computing device 100 to access a computer network such as a Local Area Network (LAN), a Wide Area Network (WAN), a Personal Area Network (PAN), or the Internet through a variety of wired and/or wireless connections, including cellular connections.

In described embodiments, the computing device 100 may execute an application on behalf of a user of a client device. For example, the computing device 100 may execute one or more virtual machines managed by a hypervisor. Each virtual machine may provide an execution session within which applications execute on behalf of a user or a client device, such as a hosted desktop session. The computing device 100 may also execute a terminal services session to provide a hosted desktop environment. The computing device 100 may provide access to a remote computing environment including one or more applications, one or more desktop applications, and one or more desktop sessions in which one or more applications may execute.

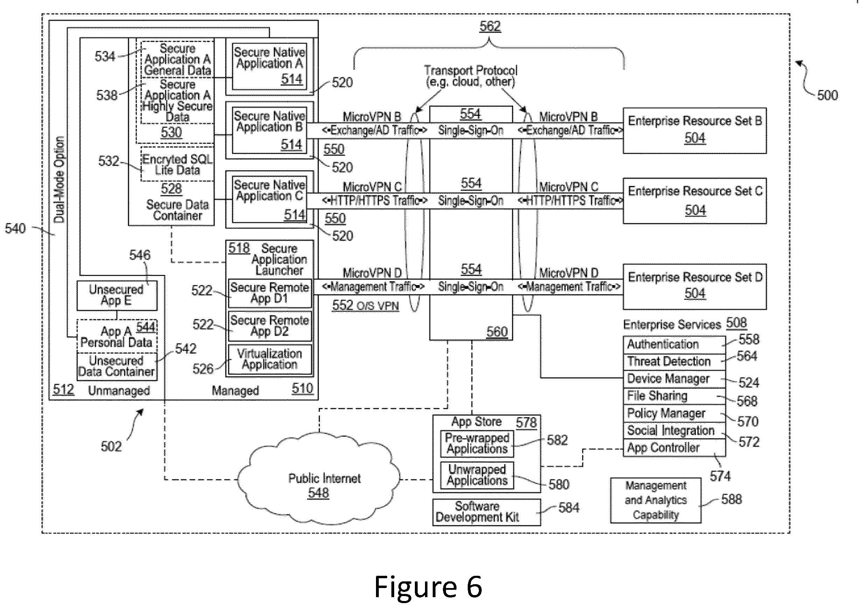

Figure 6 represents enterprise mobility technical architecture 500 for use in a "Bring Your Own Device" (BYOD) environment. The architecture enables a user of mobile device 502 to both access enterprise or personal resources from mobile device 502 and use mobile device 502 for personal use. The user may access such enterprise resources 504 or enterprise services 508 using mobile device 502 that is purchased by the user or provided by the enterprise to the user. The user may utilize mobile device 502 for business use only or for both business and personal use. Mobile device 502 may run an iOS^{®} operating system (Apple Inc. of Cupertino, California), an Android^{®} operating system (Google Inc. of Mountain View, California), or the like. Although example embodiments are illustrated in terms of mobile device 502, a non-mobile device such as a desktop PC may also be used in lieu of mobile device 502. The enterprise may choose to implement policies to manage mobile device 502. The policies may be implemented through a firewall or gateway in such a way that mobile device 502 may be identified, secured or security verified, and provided with selective or full access to the enterprise resources (e.g., enterprise resources 504 and enterprise services 508). The policies may be mobile device management policies, mobile application management policies, mobile data management policies, or some combination of mobile device, application, and data management policies. Mobile device 502 that is managed through the application of mobile device management policies may be referred to as an enrolled device.

In some embodiments, the operating system of mobile device 502 may be separated into managed partition 510 and unmanaged partition 512. Managed partition 510 may have policies applied to it to secure the applications running on managed partition 510 and data stored in managed partition 510. The applications running on managed partition 510 may be secure applications. In other embodiments, all applications may execute in accordance with a set of one or more policy files received separate from the application, and which define one or more security parameters, features, resource restrictions, and/or other access controls that are enforced by the mobile device management system when that application is executing on mobile device 502. By operating in accordance with their respective policy file(s), each application may be allowed or restricted from communications with one or more other applications and/or resources, thereby creating a virtual partition. Thus, as used herein, a partition may refer to a physically partitioned portion of memory (physical partition), a logically partitioned portion of memory (logical partition), and/or a virtual partition created as a result of enforcement of one or more policies and/or policy files across multiple applications as described herein (virtual partition). Stated differently, by enforcing policies on managed applications, those applications may be restricted to only be able to communicate with other managed applications and trusted enterprise resources, thereby creating a virtual partition that is not accessible by unmanaged applications and devices.

The secure applications may be email applications, web browsing applications, software-asa-service (SaaS) access applications, Windows Application access applications, and the like. The secure applications may include secure native applications 514, secure remote applications 522 executed by secure application launcher 518, virtualization applications 526 executed by secure application launcher 518, and the like. Secure native applications 514 may be wrapped by secure application wrapper 520. Secure application wrapper 520 may include integrated policies that are executed on mobile device 502 when secure native application 514 is executed on mobile device 502. Secure application wrapper 520 may include meta-data that points secure native application 514 running on mobile device 502 to the resources hosted at the enterprise (e.g., enterprise resources 504 and enterprise services 508) that secure native application 514 may require to complete the task requested upon execution of secure native application 514. Secure remote applications 522 may be executed within secure application launcher 518. Virtualization applications 526, executed by secure application launcher 518, may utilize resources on mobile device 502, enterprise resources 504, and the like. The resources used on mobile device 502 by virtualization applications 526 may include user interaction resources, processing resources, and the like. The user interaction resources may be used to collect and transmit keyboard input, touch screen input, touch pad input, mouse input, camera input, tactile input, audio input, visual input, gesture input, and the like. The processing resources may be used to present a user interface, process data received from enterprise resources 504, and the like. The resources used at enterprise resources 504 by virtualization applications 526 may include user interface generation resources, processing resources, and the like. The user interface generation resources may be used to assemble a user interface, modify a user interface, refresh a user interface, and the like. The processing resources may be used to create information, read information, update information, delete information, and the like. For example, virtualization application 526 may record user interactions associated with a graphical user interface (GUI) and communicate them to a server application where the server application will use the user interaction data as an input to the application operating on the server. In such an arrangement, an enterprise may elect to maintain the application on the server side as well as data, files, etc. associated with the application. While an enterprise may elect to "mobilize" some applications in accordance with the principles herein by securing them for deployment on mobile device 502, this arrangement may also be elected for certain applications. For example, while some applications may be secured for use on mobile device 502, others might not be prepared or appropriate for deployment on mobile device 502 such that the enterprise may elect to provide the mobile user access to the unprepared applications through virtualization techniques. As another example, the enterprise may have large and complex applications with large and complex data sets (e.g., material resource planning applications) where it would be very difficult, or otherwise undesirable, to customize the application for mobile device 502 such that the enterprise may elect to provide access to the application through virtualization techniques. As yet another example, the enterprise may have an application that maintains highly secured data (e.g., human resources data, customer data, engineering data, etc.) that may be deemed by the enterprise as too sensitive for even the secured mobile environment such that the enterprise may elect to use virtualization techniques to only permit remote access to such applications and data. An enterprise may elect to provide both fully secured and fully functional applications on mobile device 502 as well as virtualization application 526 to allow access to applications that are deemed more properly operated on the server side. In some embodiments, virtualization application 526 may store some data, files, etc. on mobile device 502 in one of the secure storage locations. An enterprise, for example, may elect to allow certain information to be stored on mobile device 502 while not permitting other information.

In connection with virtualization application 526, as described herein, mobile device 502 may have virtualization application 526 that is designed to present GUIs and then record user interactions with the GUI. Virtualization application 526 may communicate the user interactions to the server side to be used by the server side application as user interactions with the application. In response, the application on the server side may transmit back to mobile device 502 an update to the GUI (e.g., a screen refresh). For example, the update to the GUI may include a static page, a dynamic page, an animation, or the like, thereby providing access to remotely located resources.

Secure applications 514 may access data stored in secure data container 528 in managed partition 510 of mobile device 502. The data secured in secure data container 528 may be accessed by secure native applications 514, secure remote applications 522 executed by secure application launcher 518, virtualization applications 526 executed by secure application launcher 518, and the like. The data stored in secure data container 528 may include files, databases, and the like. The data stored in secure data container 528 may include data restricted to a specific secure application (530), data shared among all secure applications (532), and the like. Shared data 532 may be stored in an encrypted SQLite database. Data restricted to a secure application (530) may include secure general data 534 and highly secure data 538. Secure general data 534 may use a strong form of encryption such as Advanced Encryption Standard (AES) 128-bit encryption or the like, while highly secure data 538 may use a very strong form of encryption such as AES 256-bit encryption. Data stored in secure data container 528 may be deleted from mobile device 502 upon receipt of a command from device manager 524. The secure applications (e.g., 514, 522, and 526) may have dual-mode option 540. Dual mode option 540 may present the user with an option to operate the secured application in an unsecured mode (also referred to as an unmanaged mode). In an unsecured mode, the secure applications may access data stored in unsecured data container 542 on unmanaged partition 512 of mobile device 502. Unsecured data container 542 may contain personal data 544. The data stored in unsecured data container 542 may also be accessed by unsecured applications 546 that are running on unmanaged partition 512 of mobile device 502. The data stored in unsecured data container 542 may remain on mobile device 502 when the data stored in secure data container 528 is deleted from mobile device 502. An enterprise may want to delete from mobile device 502 selected or all data, files, and/or applications owned, licensed or controlled by the enterprise (enterprise data) while leaving or otherwise preserving personal data, files, and/or applications owned, licensed, or controlled by the user (personal data). This operation may be referred to as a selective wipe. With the enterprise and personal data arranged in accordance to the aspects described herein, an enterprise may perform a selective wipe.

Mobile device 502 may connect to enterprise resources 504 and enterprise services 508 at an enterprise, through the public Internet 548, and the like. Alternatively, mobile device 502 may connect to enterprise resources 504 and enterprise services 508 through virtual private network connections. The virtual private network connections, also referred to as micro VPN or application-specific VPN, may be specific to particular applications (as illustrated by microVPNs 550), particular devices, particular secured areas on the mobile device (as illustrated by O/S VPN 552), and the like. For example, each of wrapped applications 514 in the secured area of mobile device 502 may access enterprise resources 504 through application-specific VPN 550 such that access to the VPN would be granted based on attributes associated with the application, possibly in conjunction with user or device attribute information. The virtual private network connections may carry Microsoft Exchange traffic, Microsoft Active Directory traffic, Hypertext Transfer Protocol (HTTP) traffic, Hypertext Transfer Protocol Secure (HTTPS) traffic, application management traffic, and the like. The virtual private network connections may support and enable single sign-on (SSO) authentication processes 554. The single sign-on processes may allow a user to provide a single set of authentication credentials, which are then verified by authentication service 558. Authentication service 558 may then grant to the user access to multiple enterprise resources 504, without requiring the user to provide authentication credentials to each individual enterprise resource 504.

The virtual private network connections may be established and managed by access gateway 560. Access gateway 560 may include performance enhancement features that manage, accelerate, and improve the delivery of enterprise resources 504 to mobile device 502. Access gateway 560 may also re-route traffic from mobile device 502 to the public Internet 548, enabling mobile device 502 to access publicly available and unsecured applications that run on the public Internet 548. Mobile device 502 may connect to the access gateway via transport network 562. Transport network 562 may use one or more transport protocols and may be a wired network, a wireless network, a cloud network, a local area network, a metropolitan area network, a wide area network, a public network, a private network, and the like.

Enterprise resources 504 may include email servers, file sharing servers, SaaS applications, web application servers, Windows application servers, and the like. Email servers may include Exchange^{®} servers, Lotus Notes^{®} servers, and the like. File sharing servers may include ShareFile^{®} servers, and the like. SaaS applications may include Salesforce, and the like. Windows application servers may include any application server that is built to provide applications that are intended to run on a local Windows operating system, and the like. Enterprise resources 504 may be premise-based resources, cloud-based resources, and the like. Enterprise resources 504 may be accessed by mobile device 502 directly or through access gateway 560. Enterprise resources 504 may be accessed by mobile device 502 via transport network 562.

Enterprise services 508 may include authentication services 558, threat detection services 564, device manager services 524, file sharing services 568, policy manager services 570, social integration services 572, application controller services 574, and the like. Authentication services 558 may include user authentication services, device authentication services, application authentication services, data authentication services, and the like. Authentication services 558 may use certificates. The certificates may be stored on mobile device 502, by enterprise resources 504, and the like. The certificates stored on mobile device 502 may be stored in an encrypted location on mobile device 502, or the certificate may be temporarily stored on mobile device 502 for use at the time of authentication. Threat detection services 564 may include intrusion detection services, unauthorized access attempt detection services, and the like. Unauthorized access attempt detection services may include detection, mitigation, and/or prevention of unauthorized attempts to access devices, applications, data, and the like. Device management services 524 may include configuration, provisioning, security, support, monitoring, reporting, and decommissioning services. File sharing services 568 may include file management services, file storage services, file collaboration services, and the like. Policy manager services 570 may include device policy manager services, application policy manager services, data policy manager services, and the like. Social integration services 572 may include contact integration services, collaboration services, integration with social networks such as Facebook, Twitter, and LinkedIn, and the like. Application controller services 574 may include management services, provisioning services, deployment services, assignment services, revocation services, wrapping services, and the like.

Enterprise mobility technical architecture 500 may include application store 578 (also referred to as an "app store"). Application store 578 may include unwrapped applications 580, prewrapped applications 582, and the like. Applications may be populated in application store 578 from application controller 574. Application store 578 may be accessed by mobile device 502 through access gateway 560, through the public Internet 548, or the like. Application store 578 may be provided with an intuitive and easy to use user interface.

Software development kit 584 may provide a user the capability to secure applications selected by the user by wrapping the application as described previously in this description. An application that has been wrapped using software development kit 584 may then be made available to mobile device 502 by populating it in application store 578 using application controller 574.

Enterprise mobility technical architecture 500 may include a management and analytics capability 588. The management and analytics capability 588 may provide information related to how resources are used, how often resources are used, and the like. Resources may include devices, applications, data, and the like. How resources are used may include which devices download which applications, which applications access which data, and the like. How often resources are used may include how often an application has been downloaded, how many times a specific set of data has been accessed by an application, and the like.

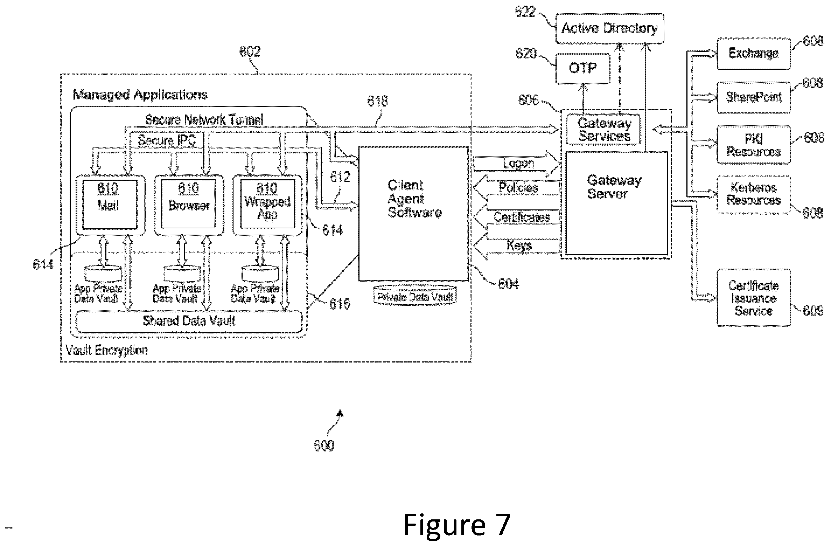

Figure 7 is another illustrative enterprise mobility management system 600. Some of the components of mobility management system 500 described above with reference to FIG. 5 have been omitted for the sake of simplicity. The architecture of system 600 depicted in FIG. 6 is similar in many respects to the architecture of system 500 described above with reference to FIG. 5 and may include additional features not mentioned above.

Enrolled mobile device 602 may include client agent software 604, which interacts with gateway server 606, which may include gateway services, such as Citrix Gateway Service^{®} developed by Citrix Systems, Inc. of Ft. Lauderdale, Florida, and application controller functionality) to access various enterprise resources 608 and services 609, such as Exchange^{®}, SharePoint^{®}, public-key infrastructure (PKI) resources, Kerberos resources, certificate issuance service. Although not specifically shown, mobile device 602 may also interact with an enterprise application store (e.g., StoreFront^{®} developed by Citrix Systems, Inc. of Ft. Lauderdale, Florida) for the selection and downloading of applications.

Client agent 604 may act as the UI intermediary for Windows apps/desktops, which are hosted in an Enterprise data center and accessed using, for example, the High-Definition User Experience (HDX)/Independent Computing Architecture (ICA) display remoting protocol developed by Citrix Systems, Inc. of Ft. Lauderdale, Florida. Client agent 604 also supports the installation and management of native applications on mobile device 602, such as native iOS^{®} or Android^{®} applications. For example, managed applications 610 (mail, browser, wrapped application) shown in the figure above may all be native applications that execute locally on mobile device 602. Client agent 604 and application management framework of this architecture may act to provide policy-driven management capabilities and features such as connectivity and SSO to enterprise resources/services 608. Client agent 604 may handle primary user authentication to the enterprise, for example, to gateway services 607 of gateway server 606 with SSO to other gateway server components. Client agent 604 may obtain policies from gateway server 606 to control the behavior of managed applications 610 on mobile device 602.

The secure interprocess communication (IPC) links 612 between native applications 610 and client agent 604 may represent a management channel, which may allow client agent 604 to supply policies to be enforced by application management framework 614 "wrapping" each application. IPC channel 612 may also allow client agent 604 to supply credential and authentication information that enables connectivity and SSO to enterprise resources 608. Finally, IPC channel 612 may allow application management framework 614 to invoke user interface functions implemented by client agent 604, such as online and offline authentication.

Communications between client agent 604 and gateway server 606 may be an extension of the management channel from application management framework 614 wrapping each native managed application 610. Application management framework 614 may request policy information from client agent 604, which in turn may request it from gateway server 606. Application management framework 614 may request authentication, and client agent 604 may log into gateway services 607 (e.g., Citrix Gateway Service^{®} developed by Citrix Systems, Inc. of Ft. Lauderdale, Florida). Client agent 604 may also call supporting services on gateway server 606, which may produce input material to derive encryption keys for local data vaults 616, or may provide client certificates, which may enable direct authentication to PKI protected resources, as more fully explained below.

In more detail, application management framework 614 "wraps" each managed application 610. This may be incorporated via an explicit build step, or via a post-build processing step. Application management framework 614 may "pair" with client agent 604 on first launch of application 610 to initialize secure IPC channel 612 and obtain the policy for that application. Application management framework 614 may enforce relevant portions of the policy that apply locally, such as the client agent login dependencies and some of the containment policies that restrict how local OS services may be used, or how they may interact with managed application 610.

Application management framework 614 may use services provided by client agent 604 over secure IPC channel 612 to facilitate authentication and internal network access. Key management for private and shared data vaults 616 (containers) may be also managed by appropriate interactions between managed applications 610 and client agent 604. Vaults 616 may be available only after online authentication, or may be made available after offline authentication if allowed by policy. First use of vaults 616 may require online authentication, and offline access may be limited to at most the policy refresh period before online authentication is again required.

Network access to internal resources may occur directly from individual managed applications 610 through gateway services 607. Application management framework 614 may be responsible for orchestrating the network access on behalf of each managed application 610. Client agent 604 may facilitate these network connections by providing suitable time-limited secondary credentials obtained following online authentication. Multiple modes of network connection may be used, such as reverse web proxy connections and end-to-end VPN-style secure network tunnels 618.

Mail and browser managed applications 610 may have special status and make use of facilities that might not be generally available to arbitrary wrapped applications. For example, mail application 610 may use a special background network access mechanism that allows it to access Exchange server 608 over an extended period of time without requiring a full gateway service logon. Browser application 610 may use multiple private data vaults 616 to segregate different kinds of data.

This architecture may support the incorporation of various other security features. For example, gateway server 606 (including gateway services 607) in some cases may not need to validate active directory (AD) 622 passwords. It can be left to the discretion of an enterprise whether an AD password may be used as an authentication factor for some users in some situations. Different authentication methods may be used if a user is online or offline (e.g., connected or not connected to a network).

Step up authentication is a feature wherein gateway server 606 may identify managed native applications 610 that are allowed to have access to highly classified data requiring strong authentication, and ensure that access to these applications is only permitted after performing appropriate authentication, even if this means a re-authentication is required by the user after a prior weaker level of login.

Another security feature of this solution is the encryption of data vaults 616 (containers) on mobile device 602. Vaults 616 may be encrypted so that all on-device data including files, databases, and configurations are protected. For online vaults, the keys may be stored on the server (gateway server 606), and for offline vaults, a local copy of the keys may be protected by a user password or biometric validation. If or when data is stored locally on mobile device 602 in secure container 616, it may be preferred that a minimum of AES 256 encryption algorithm be utilized.

Other secure container features may also be implemented. For example, a logging feature may be included, wherein security events happening inside managed application 610 may be logged and reported to the backend. Data wiping may be supported, such as when managed application 610 detects tampering or when requested by a user, associated encryption keys may be written over with random data, leaving no hint on the file system that user data was destroyed. Screenshot protection may be another feature, where an application may prevent any data from being stored in screenshots. For example, the key window's hidden property may be set to YES. This may cause whatever content is currently displayed on the screen to be hidden, resulting in a blank screenshot where any content would normally reside.

Local data transfer may be prevented, such as by preventing any data from being locally transferred outside the application container, e.g., by copying it or sending it to an external application. A keyboard cache feature may operate to disable the autocorrect functionality for sensitive text fields. SSL certificate validation may be operable so the application specifically validates the server SSL certificate instead of it being stored in the keychain. An encryption key generation feature may be used such that the key used to encrypt data on mobile device 602 is generated using a passphrase or biometric data supplied by the user (if offline access is required). It may be XORed with another key randomly generated and stored on the server side if offline access is not required. Key derivation functions may operate such that keys generated from the user password use key derivation functions (KDFs), such as Password-Based Key Derivation Function 2 (PBKDF2), rather than creating a cryptographic hash of it. The latter makes a key susceptible to brute force or dictionary attacks.

Further, one or more initialization vectors may be used in encryption methods. An initialization vector will cause multiple copies of the same encrypted data to yield different cipher text output, preventing both replay and cryptanalytic attacks. This will also prevent an attacker from decrypting any data even with a stolen encryption key. Further, authentication-thendecryption may be used, wherein application data is decrypted only after the user has authenticated within the application. Another feature may relate to sensitive data in memory, which may be kept in memory (and not in disk) only when it is needed. For example, login credentials may be wiped from memory after login, and encryption keys and other data inside objective-C instance variables are not stored, as they may be easily referenced. Instead, memory may be manually allocated for these.

An inactivity timeout may be implemented, wherein after a policy-defined period of inactivity (e.g., lack of user input), a user session is terminated.

Data leakage from application management framework 614 may be prevented in other ways. For example, if managed application 610 is put in the background, the memory may be cleared after a predetermined (configurable) time period. When backgrounded, a snapshot may be taken of the last displayed screen of the application to fasten the foregrounding process. The screenshot may contain confidential data and hence should be cleared.

Another security feature may relate to the use of one-time password (OTP) 620 without the use of AD 622 password for access to one or more applications. In some cases, some users may not know (or are not permitted to know) their AD password, and these users may thus authenticate using OTP 620 such as by using a hardware OTP system, such as RSA SecurlD^{®}, Entrust^{®}, Gemalto^{®}, and others. In some cases, after a user authenticates with a user ID, a text may be sent to the user with OTP 620. In some cases, this may be implemented only for online use, with a prompt being a single field.

An offline password may be implemented for offline authentication for those managed applications 610 for which offline use is permitted via enterprise policy. For example, an enterprise may want an enterprise application store, such as StoreFront, to be accessed in this manner. In this case, client agent 604 may require the user to set a custom offline password and the AD password is not used. Gateway server 606 may provide policies to control and enforce password standards with respect to the minimum length, character class composition, and age of passwords, such as described by the standard Windows Server password complexity requirements, although these requirements may be modified.

Another feature may relate to the enablement of a client-side certificate for certain applications 610 as secondary credentials (for the purpose of accessing PKI protected web resources via the application management framework micro VPN feature). For example, managed application 610 may utilize such a certificate. In this case, certificate-based authentication, for example, using Exchange ActiveSync protocol, may be supported, wherein a certificate from client agent 604 may be retrieved by gateway server 606 and used in a keychain. Each managed application 610 may have one associated client certificate, identified by a label that is defined in gateway server 606.

Gateway server 606 may interact with an enterprise special purpose web service to support the issuance of client certificates to allow relevant managed applications to authenticate to internal PKI protected resources.

Client agent 604 and application management framework 614 may be enhanced to support obtaining and using client certificates for authentication to internal PKI-protected network resources. More than one certificate may be supported, such as to match various levels of security and/or separation requirements. The certificates may be used by mail and browser managed applications 610, and by any other wrapped applications 610 (provided those applications use web service style communication patterns where it is reasonable for the application management framework to mediate HTTPS requests).

Application management client certificate support on iOS may rely on importing a public-key cryptography standards (PKCS) 12 BLOB (Binary Large Object) into the iOS^{®} keychain in each managed application 610 for each period of use. Application management framework client certificate support may use an HTTPS implementation with private in-memory key storage. The client certificate may not be present in the iOS^{®} keychain and may not be persisted except potentially in "online-only" data value that is strongly protected.

Mutual SSL or Transport Layer Security (TLS) may also be implemented to provide additional security by requiring that mobile device 602 is authenticated to the enterprise, and vice versa. Virtual smart cards for authentication to gateway server 606 may also be implemented.

Both limited and full Kerberos support may be additional features. The full support feature relates to an ability to do full Kerberos login to Active Directory (AD) 622, using an AD password or trusted client certificate, and obtain Kerberos service tickets to respond to HTTP Negotiate authentication challenges. The limited support feature relates, for example, to constrained delegation in Citrix Gateway^{®} developed by Citrix Systems, Inc. of Ft. Lauderdale, Florida, where Citrix Gateway^{®} supports invoking Kerberos protocol transition so it can obtain and use Kerberos service tickets (subject to constrained delegation) in response to HTTP Negotiate authentication challenges. This mechanism may work in reverse web proxy mode (also known as corporate virtual private network (CVPN) mode), and when HTTP (but not HTTPS) connections are proxied in VPN and Micro VPN mode.

Another feature may relate to application container locking and wiping, which may automatically occur upon jail-break or rooting detections, and occur as a pushed command from administration console, and may include a remote wipe functionality even when managed application 610 is not running.

A multi-site architecture or configuration of enterprise application store and an application controller may be supported that allows users to be serviced from one of several different locations in case of failure.

In some cases, managed applications 610 may be allowed to access a certificate and private key via an API (e.g., OpenSSL^{®}). Trusted managed applications 610 of an enterprise may be allowed to perform specific public key operations with an application's client certificate and private key. Various use cases may be identified and treated accordingly, such as when an application behaves like a browser and no certificate access is required, when an application reads a certificate for "who am I," when an application uses the certificate to build a secure session token, and when an application uses private keys for digital signing of important data (e.g. transaction log) or for temporary data encryption.

The following paragraphs (S1) through (S13) describe examples of systems and devices that may be implemented in accordance with the present disclosure.
(S1) A system may comprise a memory and a processor coupled to the memory and configured to allow or deny access to a network in which to exchange communications according to a method that includes: detecting presence of a device based on receipt of communications from the device, determining that the device is unmanaged by the system based on data included with the communications received from the device, the data not including a signature indicative of enrollment of the device with the system; and in response to determining that the device is unmanaged by the system, denying access to the network.
(S2) A system may be configured as described in paragraph (S1), wherein the method further includes: in response to determining that the device is unmanaged by the system, offering an enrollment option to the device; and in response to determining that the device is managed, providing network access.
(S3) A system may be configured as described in any of paragraphs (S1) or (S2), wherein detecting presence of the device includes monitoring communication channels for communications from the device.
(S4) A system may be configured as described in any of paragraphs (S 1)-S(3), wherein determining whether the device is unmanaged by the system includes configuring an access point with an enforcing agent that attempts to capture the signature from the device and then authenticates the signature with the system.
(S5) A system may be configured as described in any of paragraphs (S 1)-(S4), wherein detecting presence of the device includes utilizing a beacon or another device enrolled with the system to monitor for communications.
(S6) A system may be configured as described in any of paragraphs (S 1)-(S4), wherein detecting presence of the device includes monitoring for an announcement from the device, wherein the announcement is generated using one of: Bluetooth, Low Energy Bluetooth (BLE) or near field communications (NFC).
(S7) A system may be configured as described in any of paragraphs (S 1)-(S6), wherein the system enrolls an identified device that is unmanaged by installing an agent onto the identified device, and wherein the agent is configured to output a unique signature indicative of the identified device.
(S8) A system may be configured as described in paragraph (S7), wherein the unique signature is time dependent.
(S9) A system may be configured as described in paragraph (S7), wherein the unique signature is embedded in an encrypted token that can be decrypted by the system, and wherein the encrypted token is communicated over a secure channel.
(S10) A system may be configured as described in paragraph (S7), wherein the unique signature is provided at a predetermined communication layer based on capabilities of network switches.
(S11) A system may be configured as described in any of paragraphs (S 1)-(S 10), wherein each of a set of different communication layers utilize different frame patterns for the communications.
(S12) A system may be configured as described in any of paragraphs (S 1)-(S 11), wherein determining that the device is unmanaged includes sending a credential request to the device.
(S13) A system may be configured as described in any of paragraphs (S 1)-(S2), wherein the communications include cellular communications.

The following paragraphs (M1) through (M7) describe examples of methods that may be implemented in accordance with the present disclosure.
(M1) A method may involve allowing or denying access to a network in which to exchange communications, comprising: detecting presence of a device based on receipt of communications from the device; determining that the device is unmanaged by a service based on data included with the communications received from the device, the data not including a signature indicative of enrollment of the device with the service; and in response to determining that the device is unmanaged by the service, denying access to the network.
(M2) A method may be performed as described in paragraph (M1), further including: in response to determining that the device is unmanaged by the service, offering an enrollment option to the device; and in response to determining that the device is managed, providing network access.
(M3) A method may be performed as described in any of paragraphs (M1)-(M2), wherein detecting presence of the device includes at least one of: monitoring communication channels for communications from the device; utilizing a beacon or another device enrolled with the system to monitor for communications; or monitoring for an announcement from the device, wherein the announcement is generated using one of: Bluetooth, Low Energy Bluetooth (BLE) or near field communications (NFC).
(M4) A method may be performed as described in any of paragraphs (M1)-(M3), wherein determining whether the device is unmanaged by the service includes configuring an access point with an enforcing agent that attempts to capture the signature from the device and then authenticates the signature with the service.
(M5) A method may be performed as described in any of paragraphs (M1)-(M4), wherein an identified device that is unmanaged is enrolled into the service by installing an agent onto the identified device, wherein the agent is configured to output a unique signature indicative of the identified device, and wherein the unique signature is at least one of: time dependent; embedded in an encrypted token that can be decrypted by the service, and wherein the encrypted token is communicated over a secure channel; or provided at a predetermined communication layer based on capabilities of network switches.
(M6) A method may be performed as described in any of paragraphs (M1)-(M5), wherein each of a set of different communication layers utilize different frame patterns for the communications.
(M7) A method may be performed as described in any of paragraphs (M1)-(M6), wherein determining that the device is unmanaged includes sending a credential request to the device.

Having thus described several aspects of at least one embodiment, it is to be appreciated that various alterations, modifications, and improvements will readily occur to those skilled in the art. Such alterations, modifications, and improvements are intended to be part of this disclosure, and are intended to be within the spirit and scope of the disclosure. Accordingly, the foregoing description and drawings are by way of example only.

Various aspects of the present disclosure may be used alone, in combination, or in a variety of arrangements not specifically discussed in the embodiments described in the foregoing and is therefore not limited in this application to the details and arrangement of components set forth in the foregoing description or illustrated in the drawings. For example, aspects described in one embodiment may be combined in any manner with aspects described in other embodiments.

Also, the disclosed aspects may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc. in the claims to modify a claim element does not by itself connote any priority, precedence or order of one claim element over another or the temporal order in which acts of a method are performed, but are used merely as labels to distinguish one claimed element having a certain name from another element having a same name (but for use of the ordinal term) to distinguish the claim elements.

Also, the phraseology and terminology used herein is used for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A system, comprising:
a memory; and
a processor coupled to the memory and configured to allow or deny access to a network in which to exchange communications according to a method that includes:
detecting presence of a device based on receipt of communications from the device,
determining that the device is unmanaged by the system based on data included with the communications received from the device, the data not including a signature indicative of enrollment of the device with the system, and
in response to determining that the device is unmanaged by the system, denying access to the network.

2. The system of claim 1, wherein the method further includes:
in response to determining that the device is unmanaged by the system, offering an enrollment option to the device; and
in response to determining that the device is managed, providing network access.

3. The system of claim 1, wherein detecting presence of the device includes monitoring communication channels for communications from the device.

4. The system of claim 1, wherein determining whether the device is unmanaged by the system includes configuring an access point with a management enforcement agent that attempts to capture the signature from the device and then authenticates the signature with the system.

5. The system of claim 1, wherein detecting presence of the device includes utilizing a beacon or another device enrolled with the system to monitor for communications.

6. The system of claim 5, wherein detecting presence of the device includes monitoring for an announcement from the device, wherein the announcement is generated using one of: Bluetooth, Low Energy Bluetooth (BLE) or near field communications (NFC).

7. The system of claim 1, wherein the system enrolls an identified device that is unmanaged by installing an agent onto the identified device, and wherein the agent is configured to output a unique signature indicative of the identified device.

8. The system of claim 7, wherein the unique signature is time dependent.

9. The system of claim 7, wherein the unique signature is embedded in an encrypted token that can be decrypted by the system, and wherein the encrypted token is communicated over a secure channel.

10. The system of claim 7, wherein the unique signature is provided at a predetermined communication layer based on capabilities of network switches.

11. The system of claim 1, wherein the signature is provided over a set of different communication layers utilizing different frame patterns.

12. The system of claim 1, wherein determining that the device is unmanaged includes sending a credential request to the device.

13. The system of claim 1, wherein the communications include cellular communications.

14. A computerized method to allow or deny access to a network in which to exchange communications, comprising:
detecting presence of a device based on receipt of communications from the device;
determining that the device is unmanaged by a service based on data included with the communications received from the device, the data not including a signature indicative of enrollment of the device with the service; and
in response to determining that the device is unmanaged by the service, denying access to the network.

15. The method of claim 14, further including:
in response to determining that the device is unmanaged by the service, offering an enrollment option to the device; and
in response to determining that the device is managed, providing network access.

16. The method of claim 14, wherein detecting presence of the device includes at least one of:
monitoring communication channels for communications from the device;
utilizing a beacon or another device enrolled with the service to monitor for communications; or
monitoring for an announcement from the device, wherein the announcement is generated using one of: Bluetooth, Low Energy Bluetooth (BLE) or near field communications (NFC).

17. The method of claim 14, wherein determining whether the device is unmanaged by the service includes configuring an access point with a management enforcement agent that attempts to capture the signature from the device and then authenticates the signature with the service.

18. The method of claim 14, wherein an identified device that is unmanaged is enrolled into the service by installing an agent onto the identified device, wherein the agent is configured to output a unique signature indicative of the identified device, and wherein the unique signature is at least one of:
time dependent;
embedded in an encrypted token that can be decrypted by the service, and wherein the encrypted token is communicated over a secure channel; or
provided at a predetermined communication layer based on capabilities of network switches.

19. The method of claim 14, wherein the signature is provided at a set of different communication layers utilizing different frame patterns.

20. The method of claim 14, wherein determining that the device is unmanaged includes sending a credential request to the device.
